# EUROPÄISCHE PATENTSCHRIFT

(11) **EP 4 066 374 B1**
(45) Veröffentlichungstag und Bekanntmachung des Hinweises auf die Patenterteilung: **03.06.2026**
(21) Anmeldenummer: 20793696.4
(22) Anmeldetag: 21.10.2020
(51) Int. Cl.: H02P 29/50

(54) **VERFAHREN UND VORRICHTUNG ZUR REGELUNG EINER ELEKTRISCHEN MASCHINE**
METHOD AND DEVICE FOR REGULATING AN ELECTRIC MACHINE
PROCÉDÉ ET DISPOSITIF DE RÉGULATION D'UNE MACHINE ÉLECTRIQUE

(30) Priorität: 29.11.2019 DE 102019218544
(43) Veröffentlichungstag der Anmeldung: 05.10.2022
(73) Patentinhaber: Robert Bosch GmbH, 70442 Stuttgart (DE)
(72) Erfinder: HIRSCH, Michele, 73730 Esslingen (DE); LEE, Wei-Lung, 74321 Bietigheim-Bissingen (DE); PAULUS, Sebastian, 73728 Esslingen Am Neckar (DE)
(86) Internationale Anmeldenummer: PCT/EP2020/079597
(87) Internationale Veröffentlichungsnummer: WO 2021/104762

(56) Entgegenhaltungen:
- US-A1- 2002 097 015
- US-A1- 2006 038 531
- US-A1- 2015 127 202

## Beschreibung

Die Erfindung betrifft ein Verfahren und eine Vorrichtung zur Regelung einer elektrischen Maschine. Ferner betrifft die Erfindung ein elektrisches Antriebssystem mit einer entsprechenden Vorrichtung und ein Fahrzeug mit einem elektrischen Antriebssystem sowie ein Computerprogramm und ein computerlesbares Speichermedium.

### Stand der Technik

Die Druckschriften US 2015/127202 A1, US 2002/097015 A1 und US 2006/038531 A1 offenbaren Verfahren und Vorrichtungen zur Regelung einer elektrischen Maschine. Die Druckschrift DE 2017 102 036 91 A1 offenbart eine Regelung für eine elektrische Maschine, bei der gleichzeitig eine Störgröße kompensiert und ein Sollwert eingestellt wird. Für den Betrieb einer elektrischen Maschine wird als Sollwert ein Phasenstrom eingeregelt. Der Phasenstrom wird bevorzugt als sinusförmige Grundwelle eingeregelt. Der Phasenstrom bewirkt beim Betrieb der elektrischen Maschine die Abgabe eines gleichmäßigen mittleren Drehmomentes. Aufgrund von nicht ideal sinusförmigen Magnetfeldern, Windungsanordnungen, Nutung, Zahnform, Sättigungseffekten und/oder anderen Effekten bilden sich neben dem gleichmäßigen mittleren Drehmoment auch harmonische Oberschwingungen des Drehmomentes aus. Solche Effekte führen zu Kraftwellen zwischen Rotor und Stator, die bei charakteristischen Ordnungen als tangentiale und radiale Zahnkräfte auf die Statorzähne wirken. Durch das mechanische Übertragungsverhalten der elektrischen Maschine werden diese Kräfte als Schwingungen in der Maschine, des Maschinengehäuses und angekoppelten Elementen und damit als Körper- und Luftschall oder Oberflächenschwingungen wahrnehmbar. Die harmonischen Oberschwingungen des Drehmomentes bewirken dabei auch Oberwellen der elektrischen Frequenz der elektrischen Maschine auf dem Phasenstrom als Störgrößen. Zur Minimierung dieser Störgrößen werden gezielt Oberwellen eingeregelt und vorgegeben, welche dem eingeregelten und vorgegebenen Phasenstrom überlagert werden.

Es besteht ein Bedürfnis für alternative Verfahren und Vorrichtungen zur Regelung einer elektrischen Maschine, mit dem die Oberwellen möglichst robust, stabil, mit hoher Dynamik und Flexibilität zur Berücksichtigung relevanter Frequenzanteile geregelt werden.

### Offenbarung der Erfindung

Die Erfindung wird durch die Merkmale der unabhängigen Ansprüche definiert.

Es wird ein Verfahren zur Regelung einer elektrischen Maschine mit mindestens einem ersten Filter mindestens einem zweiten Filter bereitgestellt. Das Verfahren umfasst die Schritte:
Ermitteln einer Rückführgröße, wobei die Rückführgröße eine Istgröße einer Grundwelle und einer Oberwelle einer vorgegebenen Frequenz in einem feldorientierten System umfasst;
Filtern einer vorgebbaren GW-Gleichführungsgröße mittels dem ersten Filter;
Ermitteln der gefilterten Rückführgröße ohne Grundwellenanteil als Differenz der Rückführgröße und der gefilterten GW-Gleichführungsgröße;
Filtern der gefilterten Rückführgröße ohne Grundwellenanteil mittels mindestens einem zweiten Filter;
Ermitteln der gefilterten Rückführgröße ohne Oberwellenanteil als Addition der Ausgangsgröße des mindestens einen zweiten Filters und der gefilterten GW-Gleichführungsgröße;
Bestromen mindestens einer Wicklung der elektrischen Maschine in Abhängigkeit der gefilterten Rückführgröße ohne Oberwellenanteil.

Zur Regelung elektrischer Maschinen werden verbreitet feldorientierte Regelungen verwendet. Dabei werden die Wechselgrößen der im Zeitbereich, bevorzugt sinusförmigen, einzuregelnden Phasenströme, auch die Grundwellen genannt, mittels einer mathematischen Transformation jeweils in ein mit der Frequenz der Wechselgrößen rotierendes Koordinatensystem übertragen. Die Frequenz der Wechselgrößen bestimmt auch die Frequenz des magnetischen Feldes in der Maschine, sodass dieses mit der Frequenz der Wechselgrößen rotierende Koordinatensystem auch feldorientiertes System genannt wird. Im stationären Betrieb der elektrischen Maschine ergeben sich aus den Wechselgrößen im Zeitbereich Gleichgrößen im feldorientierten System, welche mittels der üblichen Verfahren der Regelungstechnik geregelt werden können. Das feldorientierte System wird auch d/q-Koordinatensystem genannt. Dabei zeigt dessen d-Achse in Richtung des Rotorflusses. Die q-Achse ist senkrecht zu der d-Achse. Ein sinusförmiger Phasenstrom wird als Statorstromzeiger oder Statorstromvektor repräsentiert, welcher über seine Länge und seine Richtung charakterisiert wird. Dieser Stromzeiger dreht sich synchron mit dem rotierenden Stator- oder Rotorfluss der elektrischen Maschine. In dem d/q Koordinatensystem kann der Stromzeiger entsprechend seiner Länge und seiner Richtung mittels zwei senkrecht aufeinander stehenden Komponenten Id und Iq dargestellt werden, welche im stationären Fall Gleichgrößen sind.

Zur Regelung einer mit dem Oberwellenregler verbindbaren oder anschließbaren elektrischen Maschine wird eine Rückführgröße der elektrischen Maschine in dem feldorientierten System erfasst. Diese Rückführgröße umfasst eine Grundwelle und eine überlagerte Oberwelle. In dem feldorientierten System ist der Phasenstrom eine Gleichgröße wohingegen die Oberwelle eine Wechselgröße ist. Eine vorgebbare GW-Gleichführungsgröße wird mittels dem ersten Filter gefiltert. Bevorzugt entspricht hierbei die gefilterte GW-Gleichführungsgröße einem modellierten Grundwellenanteil von dem geschlossenen Regelkreis der feldorientierten Regelung. Weiter wird eine gefilterte Rückführgröße ohne Grundwellenanteil ermittelt als Differenz der Rückführgröße und der gefilterten GW-Gleichführungsgröße. Die gefilterte Rückführgröße ohne Grundwellenanteil wird mittels mindestens einem zweiten Filter gefiltert. Als Addition der Ausgangsgröße des mindestens einen zweiten Filters und der gefilterten GW-Gleichführungsgröße wird eine gefilterte Rückführgröße ohne Oberwellenanteil ermittelt. Anschließend wird mindestens eine Wicklung der elektrischen Maschine in Abhängigkeit der Rückführgröße ohne Oberwellenanteil bestromt.

Vorteilhaft weist die Rückführgröße ohne Oberwellenanteil für den Grundwellenregler, welche bevorzugt auf einem gemessenen Strom oder Phasenstrom der elektrischen Maschine basiert, keine oder nur geringe Anteile der Oberwellen auf. Folglich wird ein Verfahren für eine effektive Bestimmung einer gefilterte Rückführgröße ohne Oberwellenanteil für einen Grundwellenregler bereitgestellt.

Die Formulierung, dass eine Größe des Regelkreises eine Oberwelle oder Grundwelle umfasst, bedeutet im Rahmen dieser Anmeldung, dass eine Größe des Regelkreises zumindest eine Oberwelle oder Grundwelle charakterisiert oder beschreibt, wobei die jeweilige Größe des Regelkreises auch weitere Signalanteile, beispielsweise Grundwelle und eine oder mehrere Oberwellen sowie zusätzlich noch vorhandene Störgrößen beinhalten kann.

Zur Regelung elektrischer Maschinen werden verbreitet in Abhängigkeit einer Drehmomentvorgabe Soll-Phasenströme in Abhängigkeit ermittelter Ist-Phasenströme vorgegeben, wobei als Stellgrößen die Phasenspannungen eingestellt werden. Folglich umfassen bevorzugt im Rahmen dieser Anmeldung die Rückführgröße (Idq), die Gleichrückführgröße (IHrmc), die Gleichführungsgröße (IHrmc*), die Maschinen-Rückführgröße (labc) oder die vorgebbare GW-Gleichführungsgröße (Idq*) jeweils einen Stromwert und/ oder die Gleichstellgröße (UHrmc*), die Stellgröße (UdqHrmc*), die GW-Gleichstellgröße oder die Maschinen-Stellgröße (Uabc*) jeweils einen Spannungswert.

Bevorzugt umfasst die Rückführgröße in dem feldorientierten System eine Grundwelle und eine Oberwelle mit einer positiven Frequenz mit einer ersten Amplitude und einer ersten Phase einer k-ten Ordnung einer elektrischen Frequenz der elektrischen Maschine und/oder eine Oberwelle mit einer negativen Frequenz mit einer zweiten Amplitude und einer zweiten Phase der k-ten Ordnung einer elektrischen Frequenz der elektrischen Maschine.

Die Rückführgröße in dem feldorientierten System umfasst mindestens eine Grundwelle und eine Oberwelle. Bezogen auf die elektrische Frequenz der elektrischen Maschine weist die Oberwelle oder die Oberwellen eine positive und/ oder negative Frequenz k-ter Ordnung auf mit jeweiliger Amplitude und Phasenlage. Eine Ordnung, die eine relevante Störgröße darstellt, da insbesondere deren Amplituden besonders groß sind, ist beispielsweise die 6 Ordnung, bevorzugt in positiver und negativer Richtung. Beispielsweise bei einer elektrischen Frequenz der elektrischen Maschine, also der Grundwelle, von 450 Hz im Zeitbereich, ist die Frequenz der 6. Ordnung bei 450Hz+450Hz*6= 3150Hz sowie in negativer Richtung bei 450Hz-6*450Hz=-2250Hz. Im feldorientierten System, dessen Koordinatensystem mit der elektrischen Frequenz der elektrischen Maschine rotiert, wird die elektrische Frequenz der elektrischen Maschine auf 0Hz abgebildet und es ergeben sich die Frequenzen +2700Hz und -2700 Hz für die Oberwellen +/- 6. Ordnung. In Abhängigkeit der Größe der Amplituden und der Phasenlage ergeben sich Kraftwellen zwischen Rotor und Stator der elektrischen Maschine, die als tangentiale und radiale Zahnkräfte auf die Statorzähne wirken und die harmonischen Oberschwingungen des Drehmomentes bewirken. Je mehr relevante Ordnungen der Rückführgrößen für die Regelung berücksichtigt werden, desto effektiver werden die Störgrößen ausgeregelt.

In einer anderen Ausgestaltung der Erfindung umfasst die vorgebbare GW-Gleichführungsgröße des feldorientierten Systems eine Sollgröße zur Erzeugung der Grundwelle eines sinusförmigen Phasenstroms zur Bestromung mindestens einer Wicklung der elektrischen Maschine.

Die GW-Gleichführungsgröße ist ein Sollwert zur Erzeugung einer Grundwelle mit der elektrischen Frequenz der elektrischen Maschine zur Bestromung der elektrischen Maschine. Dieser Sollwert wird insbesondere in Abhängigkeit einer Drehmomentvorgabe, eines (Phasen-)Stromsollwertes oder eines Ist-Stromwertes, bevorzugt eines ermittelten Phasenstroms, analytisch oder mittels Kennfeld vorgegeben. Zur Verwendung in einem GW-Regler im feldorientierten System wird er bereits entsprechend transformiert vorgegeben.

Vorteilhaft wird eine GW-Gleichführungsgröße bereitgestellt zur Bestimmung einer Rückführgröße ohne Oberwellenanteil für einen Grundwellenregler.

In einer anderen Ausgestaltung der Erfindung umfasst das Filtern der gefilterten Rückführgröße ohne Grundwellenanteil mittels mindestens eines zweiten Filters ein Notch-Filtern der der gefilterten Rückführgröße ohne Grundwellenanteil.

Mittels Notch-Filtern werden gezielt Oberwellenanteile der Differenz der Rückführgröße und der gefilterten GW-Gleichführungsgröße entfernt. Bevorzugt werden zur Filterung der Oberwellenanteile positiver, negativer Frequenzen und/ oder unterschiedlicher Ordnungen mehrere Notch-Filter nacheinander angewandt oder hintereinander geschaltet. Bevorzugt werden die Koeffizienten der Notch-Filter multipliziert zur Bereitstellung eines Filters mit mehreren Stopbändern. Die Notchfilter werden idealerweise digital als IIR Filter ausgelegt.

Vorteilhaft wird ein effektives Verfahren zur Entfernung des Oberwellenanteils vorgebbarer Ordnungen der Oberwellen für die gefilterte Rückführgröße ohne Oberwellenanteil bereitgestellt.

In einer anderen Ausgestaltung der Erfindung umfasst das Filtern der vorgebbaren GW-Gleichführungsgröße mittels des ersten Filters ein Tiefpassfiltern der GW-Gleichführungsgröße.

Vorteilhaft wird ein effektives Verfahren zur Entfernung des Grundwellenanteils der GW-Gleichrückführgröße basierend auf der GW-Gleichführungsgröße bereitgestellt.

In einer anderen Ausgestaltung der Erfindung entspricht die Filterzeitkonstante des Filters der Bandbreite des feldorientierten Systems oder der Bandbreite des geschlossenen feldorientierten Regelkreises.

Die Filterzeitkonstante wird gleich oder abhängig von der Einschwingzeit des geschlossenen Regelkreises der feldorientierten Regelung vorgegeben.

Vorteilhaft wird eine Möglichkeit bereitgestellt, den Verlauf der GW-Gleichrückführgröße basierend auf der GW-Gleichführungsgröße zu modellieren.

In einer anderen Ausgestaltung des Verfahrens zur Regelung einer elektrischen Maschine umfasst diese weiter einen Grundwellenregler, wobei der Grundwellenregler eine GW-Eingangstransformation, einen GW-Regler und eine GW-Ausgangstransformation umfasst. Das Verfahren umfasst die weiteren Schritte: Ermitteln einer Maschinen-Rückführgröße, wobei die Maschinenrückführgröße eine Istgröße der elektrischen Maschine umfasst;
Transformieren der Maschinen-Rückführgröße mittels der GW-Eingangstransformation zu der Rückführgröße in dem feldorientierten System;
Ermitteln der GW-Regelabweichung als Differenz der vorgegebenen GW-Gleichführungsgröße und der gefilterten Rückführgröße ohne Oberwellenanteil in dem feldorientierten System Ermitteln einer GW-Gleichstellgröße mittels des GW-Reglers in Abhängigkeit der GW-Regelabweichung;
Rücktransformieren der GW-Gleichstellgröße mittels der GW-Ausgangstransformation zu einer Maschinen-Stellgröße, und Bestromen mindestens einer Wicklung der elektrischen Maschine in Abhängigkeit der Maschinen-Stellgröße

Mittels der Grundwellenregelung werden die Wechselgrößen der im Zeitbereich, bevorzugt sinusförmigen, einzuregelnden Phasenströme geregelt. Zur Regelung einer mit dem Grundwellenregler verbindbaren oder anschließbaren elektrischen Maschine wird eine Maschinen-Rückführgröße, eine Istgröße, der elektrischen Maschine im Zeitbereich erfasst. Die Maschinen-Rückführgrößen sind bevorzugt die Phasenströme mit überlagerten Störgrößen einer elektrischen Maschine. Diese Maschinen-Rückführgröße umfasst den Phasenstrom als Grundwelle und als Störgrößen Oberwellen, welche den Phasenstrom durch die elektrische Maschine überlagern. In dem Zeitbereich ist der Phasenstrom eine Wechselgröße welche mit weiteren Wechselgrößen der Oberwellen überlagert ist. Zur Regelung der Grundwelle erfolgt eine Transformation aus dem Zeitbereich in den feldorientierten Bereich. Hierzu wird die Maschinen-Rückführgröße mittels einer GW-Eingangstransformation zu der Rückführgröße in dem feldorientierten System transformiert. Bevorzugt steht "GW" im Rahmen dieser Anmeldung als Kennzeichnung für die Regelschritte und Transformationen, die für die Regelung der Grundwelle verwendet werden. Im stationären Betrieb der elektrischen Maschine ergeben Wechselgrößen im Zeitbereich Gleichgrößen im feldorientierten System. Diese können mittels der üblichen Verfahren der Regelungstechnik geregelt werden. Entsprechend wird eine GW-Regelabweichung als Differenz der vorgegebenen GW-Gleichführungsgröße und der gefilterten Rückführgröße ohne Oberwellenanteil in dem feldorientierten System ermittelt. Mittels eines GW-Reglers wird eine GW-Gleichstellgröße in Abhängigkeit der GW-Regelabweichung ermittelt. Die GW-Gleichstellgröße im feldorientierten System wird zur weiteren Verwendung zur Ansteuerung oder Bestromung der elektrischen Maschine im Zeitbereich mittels der GW-Ausgangstransformation rücktransformiert zu einer Maschinen-Stellgröße in dem Zeitbereich. Im Zeitbereich umfasst die Maschinen-Stellgröße eine Wechselgröße, eine Grundwelle. Schließlich umfasst das Verfahren einen Schritt zum Bestromen der elektrischen Maschine in Abhängigkeit der Maschinen-Stellgröße.

Vorteilhaft wird ein Verfahren für einen effektiven Grundwellenregler bereitgestellt.

In einer anderen Ausgestaltung des Verfahrens zur Regelung einer elektrischen Maschine umfasst diese weiter einen Oberwellenregler, wobei der Oberwellenregler eine Eingangstransformation, einen Regler und eine Ausgangstransformation umfasst. Das Verfahren weist folgende weitere Schritte auf:
Transformieren der gefilterten Rückführgröße ohne Grundwellenanteil mittels der Eingangstransformation zu einer Gleichrückführgröße in einem oberwellenorientierten System;
Ermitteln einer Regelabweichung als Differenz einer vorgebbaren Gleichführungsgröße und der Gleichrückführgröße in dem oberwellenorientierten System; Ermitteln einer Gleichstellgröße mittels des Reglers in Abhängigkeit der Regelabweichung;
Rücktransformieren der Gleichstellgröße mittels der Ausgangstransformation zu einer Stellgröße in dem feldorientierten System;
Überlagern der GW-Gleichstellgröße mit der Stellgröße wobei bei dem Schritt Rücktransformieren mittels der GW-Ausgangstransformation zu einer Maschinen-Stellgröße der Ausgangswert der Überlagerung der GW-Gleichstellgröße mit der Stellgröße zu der Maschinen-Stellgröße rücktransformiert wird.

Eine vorgebbare GW-Gleichführungsgröße wird mittels des ersten Filters gefiltert. Bevorzugt entspricht hierbei die gefilterte GW-Gleichführungsgröße einem modellierten Grundwellenanteil von dem geschlossenen Regelkreis der feldorientierten Regelung. Als Differenz der Rückführgröße und der gefilterten GW-Gleichführungsgröße wird eine gefilterte Rückführgröße ohne Grundwellenanteil ermittelt. Zur Verwendung der Rückführgröße ohne Grundwellenanteil in einem Oberwellenregler wird die Rückführgröße ohne Grundwellenanteil mittels der Eingangstransformation zu einer Gleichrückführgröße in einem oberwellenorientierten System transformiert.

Für eine Regelung einer Oberwelle in einem Oberwellenregler erfolgt, ähnlich der Transformation aus dem Zeitbereich in den feldorientierten Bereich, mittels der Eingangstransformation eine mathematische Transformation mit einer Frequenz der Oberwelle aus dem feldorientierten System in ein oberwellenorientiertes System. Hierzu wird die Rückführgröße ohne Grundwellenanteil mittels einer Eingangstransformation zu einer Gleichrückführgröße in das oberwellenorientierte System transformiert. Größen, die im feldorientierten System als Wechselgrößen dargestellt werden, werden im stationären Betrieb der elektrischen Maschine im oberwellenorientierten System als Gleichgrößen dargestellt. Diese können mittels der üblichen Verfahren der Regelungstechnik geregelt werden.

Die Transformation aus dem feldorientierten System in das oberwellenorientierte System umfasst eine Drehung mittels einer Drehmatrix oder Rotationsmatrix. Eine Wechselgröße im feldorientierten System wird somit zu einer Gleichgröße im oberwellenorientierten System. Hierzu wird die Rückführgröße mit einem Drehwinkel, der dem k-fachen des aktuellen Rotorwinkels entspricht gedreht, also bei der Transformation der Oberwelle der 6. Ordnung der elektrischen Frequenz mit dem 6-fachen des aktuellen Rotorwinkels. Für die Oberwellen der k-ten Ordnung in positiver Richtung erfolgt die Drehung in positive Richtung, bei den Oberwellen der k-ten Ordnung in negativer Richtung erfolgt die Drehung in negative Richtung. Die resultierenden Gleichgröße im oberwellenorientierten System können mittels komplexer Zahlen oder als komplexe Parameter, bspw. als iPosReal, iPoslmag bzw. als iNegReal und iNeglmag angegeben, charakterisiert oder beschrieben werden.

Neben der Drehung sind alternativ auch andere Transformationen verwendbar. Beispielsweise kann auch durch Multiplikation von dem d-Strom mit dem Sinus abhängig von dem k-fachen Rotorwinkel sowie mit dem Kosinus die komplexen Anteile iDSin, IDCos und durch Multiplikation von dem q-Strom mit dem Sinus sowie mit dem Kosinus die komplexen Anteile iQSin, IQCos berechnet werden (auch Frequenzmixen oder Heterodyning gennant).

Als eine weitere alternative Beschreibung können komplexe Oberwellen mit Amplitude und Phase jeweils von dem d-Strom und q-Strom verwendet werden.

Ebenso lassen sich die Anteile auch als Ellipse mit Höhe, Breite, Drehung und Phase durch eine Überlagerung von zwei gegenläufig drehenden Zeigern mit unterschiedlicher Amplitude und Phase darstellen, bevorzugt für eine besonders effiziente Kalibrierung.

Weiter wird eine Regelabweichung als Differenz einer vorgebbaren Gleichführungsgröße und der Gleichrückführgröße in dem oberwellenorientierten System ermittelt. Mittels eines Reglers wird eine Gleichstellgröße in Abhängigkeit der Regelabweichung ermittelt. Diese Gleichstellgröße als Gleichgröße im oberwellenorientierten System wird zur weiteren Verwendung in der feldorientierten Regelung der elektrischen Maschine mittels der Ausgangstransformation rücktransformiert zu einer Stellgröße in dem feldorientierten System. Im feldorientierten System umfasst die Stellgröße eine Wechselgröße, eine Oberwelle.

Bevorzugt umfasst die vorgebbare Gleichführungsgröße des oberwellenorientierten Systems eine Sollgröße in dem oberwellenorientierten System zur Erzeugung einer Oberwelle auf einem sinusförmigen Phasenstrom zur Bestromung mindestens einer Wicklung der elektrischen Maschine.

Die Gleichführungsgröße ist ein Sollwert zur Erzeugung einer Oberwelle einer vorgebbaren Frequenz oder k-ten Ordnung der elektrischen Frequenz der elektrischen Maschine zur Überlagerung des sinusförmigen Phasenstroms oder der Grundwelle zur Bestromung der elektrischen Maschine. Dieser Sollwert wird insbesondere in Abhängigkeit einer Drehmomentvorgabe, eines (Phasen-)Strom-sollwertes oder eines Ist-Stromwertes, eines ermittelten Phasenstroms analytisch oder mittels Kennfeld vorgegeben. Zur Verwendung im Oberwellenregler im oberwellenorientierten System wird er bereits entsprechend transformiert vorgegeben.

Bevorzugt erfolgt das Rücktransformieren der Gleichstellgröße in Abhängigkeit eines ermittelten aktuellen Rotorwinkels der elektrischen Maschine. Das Rücktransformieren umfasst eine Drehung mit einem Drehwinkel, der dem k-fachen des aktuellen Rotorwinkels entspricht. Das Rücktransformieren umfasst jeweils eine Drehung in positive und/ oder negative entgegengesetzter Richtung des Drehens der Rückführgröße mittels der Eingangstransformation. Die Transformation aus dem oberwellenorientierten System in das feldorientierte System umfasst eine Drehung mittels einer Drehmatrix oder Rotationsmatrix. Eine Gleichgröße im oberwellenorientierten System wird so zu einer Wechselgröße im feldorientierten System. Hierzu wird die Gleichstellgröße mit einem Drehwinkel, der dem k-fachen des aktuellen Rotorwinkels entspricht gedreht, also bei der Transformation der Oberwelle der 6. Ordnung der elektrischen Frequenz mit dem 6-fachen des aktuellen Rotorwinkels. Für die Oberwellen der k-ten Ordnung in positiver Richtung erfolgt die Drehung in positive Richtung, bei den Oberwellen der k-ten Ordnung in negativer Richtung erfolgt die Drehung in negative Richtung. Es resultieren Wechselgrößen im feldorientierten System. Bevorzugt werden bei einer Drehung in negative und positive Richtung die resultierenden Wechselgrößen im feldorientierten System komplex addiert zu der Stellgröße.

Weiter wird die Stellgröße als Ausgangssignal des Oberwellenreglers wird mit der GW-Gleichstellgröße im feldorientierten System überlagert oder addiert.

Diese Ausgangsgröße der Überlagerung im feldorientierten System wird zur weiteren Verwendung zur Ansteuerung oder Bestromung der elektrischen Maschine im Zeitbereich mittels der GW-Ausgangstransformation rücktransformiert zu einer Maschinen-Stellgröße in dem Zeitbereich. Im Zeitbereich umfasst die Maschinen-Stellgröße eine Wechselgröße, eine Grundwelle, und mindestens eine weitere überlagerte Wechselgröße, eine Oberwelle. Schließlich umfasst das Verfahren einen Schritt zum Bestromen der elektrischen Maschine in Abhängigkeit der Maschinen-Stellgröße.

Vorteilhaft wird ein Verfahren für einen effektiven Grundwellen- und Oberwellenregler bereitgestellt.

Ferner betrifft die Erfindung ein Computerprogramm, welches Befehle umfasst, die bei der Ausführung durch einen Computer diesen veranlassen, die Schritte des bisher beschriebenen Verfahrens auszuführen.

Ferner betrifft die Erfindung ein computerlesbares Speichermedium, umfassend Befehle, die bei der Ausführung durch einen Computer diesen veranlassen, die Schritte des bisher beschriebenen Verfahrens auszuführen.

Ferner betrifft die Erfindung eine Vorrichtung zur Regelung einer elektrischen Maschine mit einer Recheneinheit und mindestens einem ersten Filter und einem zweiten Filter. Die Vorrichtung ist dazu eingerichtet, die Schritte des beschriebenen Verfahrens auszuführen.

Vorteilhaft wird eine Vorrichtung für eine effektive Bestimmung einer gefilterten Rückführgröße ohne Oberwellenanteil für einen Grundwellenregler bereitgestellt.

In einer anderen Ausgestaltung der Erfindung umfasst die Vorrichtung einen Grundwellenregler, wobei der Grundwellenregler eine GW-Eingangstransformation, einen GW-Regler und eine GW-Ausgangstransformation umfasst. Die Vorrichtung ist dazu eingerichtet, die Schritte des beschriebenen Verfahrens auszuführen.

Vorteilhaft wird eine Vorrichtung für eine effektive Oberwellenregelung einer elektrischen Maschine bereitgestellt.

In einer anderen Ausgestaltung der Erfindung umfasst die Vorrichtung einen einen Oberwellenregler, wobei der Oberwellenregler eine Eingangstransformation, einen Regler und eine Ausgangstransformation umfasst. Die Vorrichtung ist dazu eingerichtet, die Schritte des beschriebenen Verfahrens auszuführen.

Vorteilhaft wird eine Vorrichtung für eine effektive, kombinierte Grundwellen- und Oberwellenregelung einer elektrischen Maschine bereitgestellt.

Ferner betrifft die Erfindung ein elektrisches Antriebssystem mit einer elektrischen Maschine und einer beschriebenen Vorrichtung. Ein derartiges elektrisches Antriebssystem dient beispielsweise dem Antrieb eines elektrischen Fahrzeugs. Mittels des Verfahrens und der Vorrichtung wird ein optimierter Betrieb des Antriebstrangs ermöglicht.

Ferner betrifft die Erfindung ein Fahrzeug, mit einem beschriebenen Antriebssystem. Vorteilhaft wird somit ein Fahrzeug bereitgestellt, welches eine Vorrichtung umfasst, mit der eine elektrische Maschine effektiv geregelt wird.

Es versteht sich, dass die Merkmale, Eigenschaften und Vorteile des erfindungsgemäßen Verfahrens entsprechend auf die Vorrichtung bzw. das Antriebssystem und das Fahrzeug und umgekehrt zutreffen bzw. anwendbar sind.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnung

Im Folgenden soll die Erfindung anhand einiger Figuren näher erläutert werden, dazu zeigen:
Figur 1
   eine schematische Regelstruktur zur Regelung einer elektrischen Maschine
Figur 2
   eine schematische Regelstruktur zur Regelung einer elektrischen Maschine mit einem Oberwellenregler
Figur 3
   eine schematische Regelstruktur eines Oberwellenreglers
Figur 4
   ein schematisch dargestelltes Ablaufdiagramm für ein Verfahren zur Regelung einer elektrischen Maschine.
Figur 5
   eine schematische dargestellte Vorrichtung zur Regelung einer elektrischen Maschine
Figur 6
   ein schematisch dargestelltes Fahrzeug mit einem elektrischen Antriebssystem

### Ausführungsformen der Erfindung

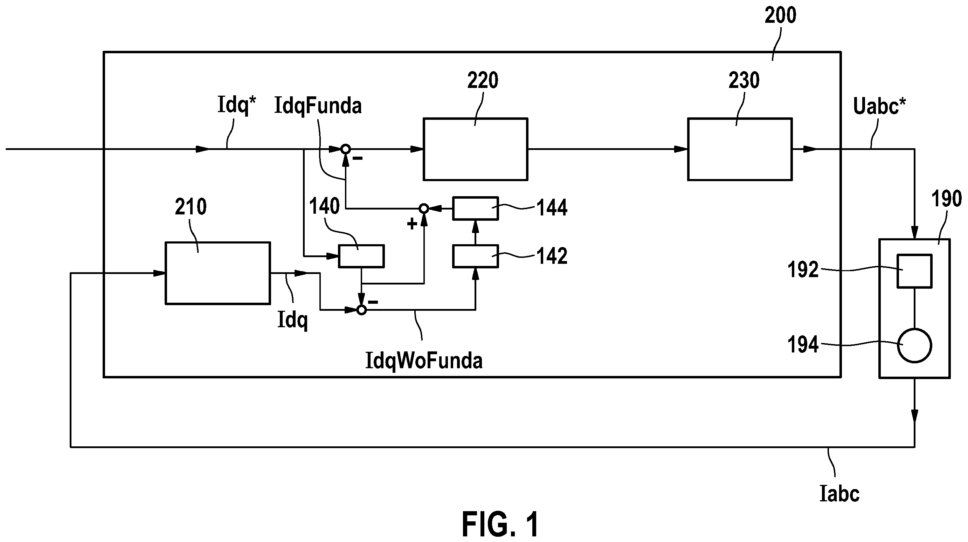

Die Figur 1 zeigt eine schematische Regelstruktur zur Regelung einer elektrischen Maschine 190. Die elektrische Maschine 190 ist als eine Einheit aus Inverter 192 und eines elektrischen Motors 194 dargestellt. Der Grundwellenregler 200 umfasst eine GW-Eingangstransformation 210, einen GW-Regler 220 und eine GW-Ausgangstransformation 230. Weiter umfasst die Regelstruktur einen ersten Filter 140 und zweiten Filter 142 und 144. Eine Maschinen-Rückführgröße labc der elektrischen Maschine wird im Zeitbereich ermittelt und der GW-Eingangstransformation 210 zugeführt. Die Maschinen-Rückführgröße labc wird mittels der GW-Eingangstransformation 210 zu der Rückführgröße Idq in das feldorientierte System transformiert. Eine vorgebbaren GW-Gleichführungsgröße Idq* wird mittels dem ersten Filter 140 gefiltert. Als Differenz der Rückführgröße Idq und der gefilterten GW-Gleichführungsgröße Idq* wird eine gefilterte Rückführgröße ohne Grundwellenanteil IdqWoFunda ermittelt, welche mittels mindestens einem zweiten Filter 142, 144 gefiltert wird. Die gefilterte Rückführgröße ohne Oberwellenanteil IdqFunda wird als Addition der Ausgangsgröße des mindestens einen zweiten Filters 142, 144 und der gefilterten GW-Gleichführungsgröße Idq* ermittelt. Die GW-Regelabweichung wird als Differenz der vorgegebenen GW-Gleichführungsgröße Idq* und der gefilterten Rückführgröße ohne Oberwellenanteil IdqFunda in dem feldorientierten System ermittelt. In Abhängigkeit der GW-Regelabweichung wird eine GW-Gleichstellgröße mittels des GW-Reglers 220 ermittelt. Die GW-Gleichstellgröße wird mittels der GW-Ausgangstransformation 230 zu einer Maschinen-Stellgröße Uabc* in den Zeitbereich transformiert. Die Maschinen-Stellgröße Uabc*, bevorzugt eine Phasenspannung, wird zur Bestromung mindestens einer Wicklung der elektrischen Maschine 190 dieser bereitgestellt. Mittels des Inverters 192 wird die Phasenspannung generiert und mindestens an einer Wicklung des elektrischen Motors 194 angelegt.

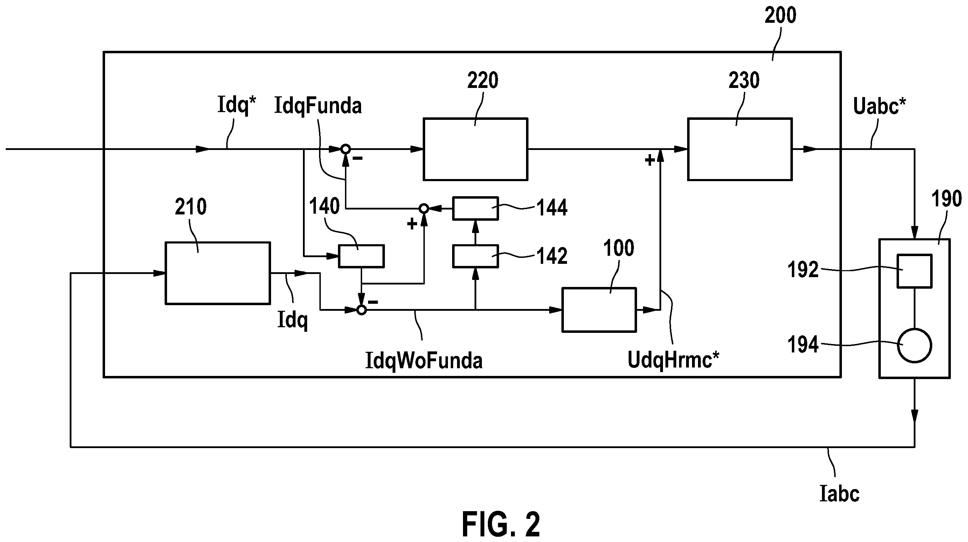

Die Figur 2 zeigt eine schematische Regelstruktur zur Regelung einer elektrischen Maschine mit einem Oberwellenregler 100. Im Unterschied zur Figur 1 ermittelt der Oberwellenregler in Abhängigkeit der gefilterten Rückführgröße ohne Grundwellenanteil IdqWoFunda die Stellgröße UdqHrmc*. In diesem Fall wird die parallel ermittelte GW-Gleichstellgröße mit der Stellgröße UdqHrmc* überlagert. Die Ausgangsgröße der Überlagerung im feldorientierten System wird mittels der GW-Ausgangstransformation 230 zu einer Maschinen-Stellgröße Uabc* in den Zeitbereich transformiert. Die Maschinen-Stellgröße Uabc*, bevorzugt eine Phasenspannung, wird zur Bestromung mindestens einer Wicklung der elektrischen Maschine 190 dieser bereitgestellt. Mittels des Inverters 192 wird die Phasenspannung generiert und mindestens an einer Wicklung des elektrischen Motors 194 angelegt.

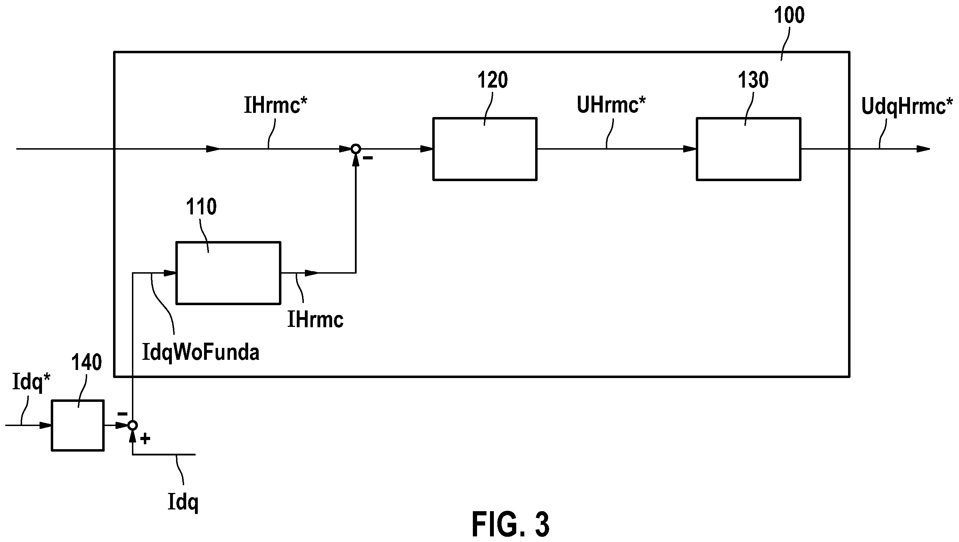

Die Figur 3 zeigt eine schematische Regelstruktur eines Oberwellenreglers 100 mit einem Filter 140. Der Oberwellenregler 100 umfasst eine Eingangstransformation 110. Mittels des Filters 140 wird eine vorgebbaren GW-Gleichführungsgröße Idq* gefiltert, bevorzugt tiefpassgefiltert. Weiter wird eine Rückführgröße Idq in einem feldorientierten System ermittelt. Als Differenz der Rückführgröße Idq und der gefilterten GW-Gleichführungsgröße Idq* wird die gefilterte Rückführgröße ohne Grundwellenanteil IdqWoFunda ermittelt. Diese gefilterte Rückführgröße ohne Grundwellenanteil IdqWoFunda wird mittels der Eingangstransformation 110 zu einer Gleichrückführgröße IHrmc in einem oberwellenorientierten System transformiert. Der Oberwellenregler 100 umfasst weiter einen Regler 120 und eine Ausgangstransformation 130. Es wird eine ermittelte Differenz aus einer vorgebbaren Gleichführungsgröße IHrmc* und der Gleichrückführgröße IHrmc in dem oberwellenorientierten System als Regelabweichung und Eingangsgröße dem Regler 120 zugeführt. Mittels des Reglers 120 wird in Abhängigkeit von der Regelabweichung eine Gleichstellgröße UHrmc* ermittelt. Diese Gleichstellgröße UHrmc* wird im oberwellenorientierten System mittels der Ausgangstransformation zu einer Stellgröße UdqHrmc* in dem feldorientierten System transformiert. Bevorzugt wird mindestens eine Wicklung einer elektrischen Maschine 190 in Abhängigkeit der Stellgröße UdqHrmc* bestromt.

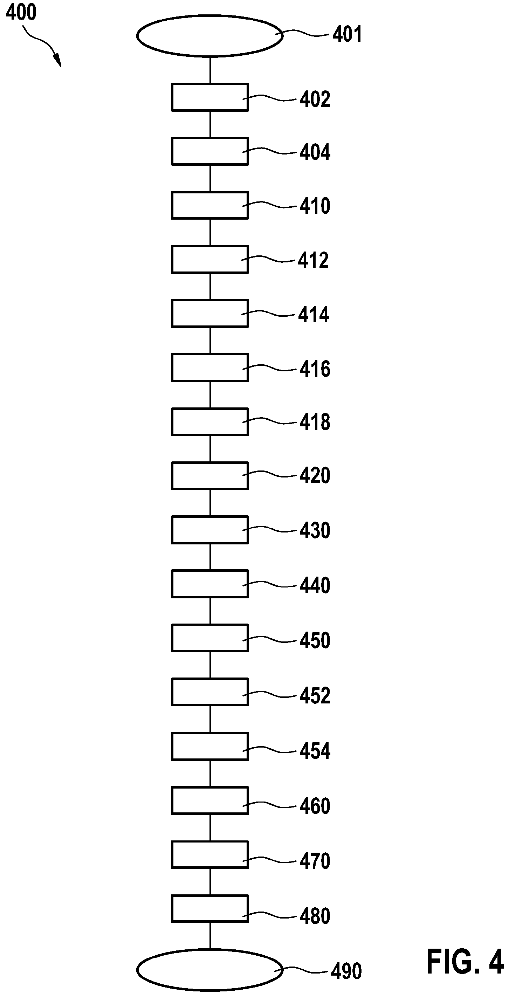

Die Figur 4 zeigt ein schematisch dargestelltes Ablaufdiagramm für ein Verfahren 400 zur Regelung einer elektrischen Maschine 190. Mit Schritt 401 beginnt das Verfahren. Bevorzugt wird in Schritt 402 eine Maschinen-Rückführgröße labc der elektrischen Maschine im Zeitbereich ermittelt. Bevorzugt wird in Schritt 404 diese Maschinen-Rückführgröße labc mittels der GW-Eingangstransformation 210 zu der Rückführgröße Idq in das feldorientierte System transformiert.

In Schritt 410 wird eine Rückführgröße Idq ermittelt. In Schritt 412 wird mittels dem ersten Filter 140 eine vorgebbare GW-Gleichführungsgröße Idq* gefiltert. In Schritt 414 wird die gefilterte Rückführgröße ohne Grundwellenanteil IdqWoFunda als Differenz der Rückführgröße Idq und der gefilterten GW-Gleichführungsgröße Idq* ermittelt. In Schritt 416 wird die gefilterte Rückführgröße ohne Grundwellenanteil IdqWoFunda mittels mindestens einem zweiten Filter 142, 144 gefiltert. In Schritt 418 wird eine gefilterte Rückführgröße ohne Oberwellenanteil IdqFunda ermittelt als Addition der Ausgangsgröße des mindestens einen zweiten Filters 142, 144 und der gefilterten GW-Gleichführungsgröße Idq*. Bevorzugt wird in Schritt 480 mindestens eine Wicklung der elektrischen Maschine 190 in Abhängigkeit der gefilterten Rückführgröße ohne Oberwellenanteil Idq Funda bestromt.

Bevorzugt wird in Schritt 420 wird die gefilterte Rückführgröße ohne Grundwellenanteil IdqWoFunda mittels der Eingangstransformation 110 zu einer Gleichrückführgröße IHrmc in einem oberwellenorientierten System transformiert. In Schritt 430 wird eine Differenz aus einer vorgebbaren Gleichführungsgröße IHrmc* und der Gleichrückführgröße IHrmc als Regelabweichung und Eingangsgröße dem Regler 120 zugeführt. In Schritt 440 wird mittels des Reglers in Abhängigkeit von der Regelabweichung eine Gleichstellgröße UHrmc* ermittelt. In Schritt 450 wird diese Gleichstellgröße UHrmc* im oberwellenorientierten System mittels der Ausgangstransformation zu einer Stellgröße UdqHrmc* in dem feldorientierten System transformiert. Bevorzugt wird in Schritt 452, als Differenz der vorgegebenen GW-Gleichführungsgröße Idq* und der gefilterten Rückführgröße ohne Oberwellenanteil IdqFunda in dem feldorientierten System, eine GW-Regelabweichung ermittelt. Bevorzugt wird in Schritt 454 in Abhängigkeit der GW-Regelabweichung eine GW-Gleichstellgröße mittels des GW-Reglers 220 ermittelt. Bevorzugt wird in Schritt 460 die GW-Gleichstellgröße mit der Stellgröße UdqHrmc* überlagert. Bevorzugt wird in Schritt 470 die Ausgangsgröße der Überlagerung im feldorienterten System mittels der GW-Ausgangstransformation 230 zu einer Maschinen-Stellgröße Uabc* in den Zeitbereich transformiert. Bevorzugt wird in Schritt 480 mindestens eine Wicklung der elektrischen Maschine 190 in Abhängigkeit der Maschinen-Stellgröße Uabc* bestromt. Mit Schritt 490 endet das Verfahren.

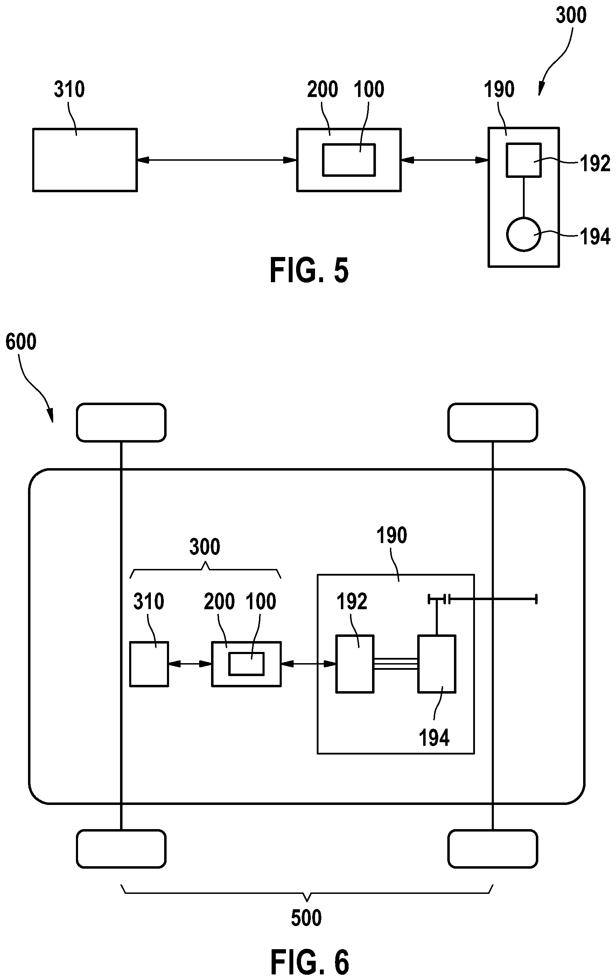

Die Figur 5 zeigt eine schematische dargestellte Vorrichtung 300 zur Regelung einer elektrischen Maschine 190. Die elektrische Maschine 190 ist als eine Einheit aus Inverter 192 und eines elektrischen Motors 194 dargestellt. Die Vorrichtung 300 umfasst einen Oberwellenregler 100 und eine Recheneinheit 310 zur Steuerung und Umsetzung der Struktur des Oberwellenreglers 100. Die Vorrichtung umfasst bevorzugt einen Grundwellenregler 200, der ebenfalls mittels der Recheneinheit 310 gesteuert und umgesetzt wird. Die Vorrichtung ist dazu eingerichtet, die oben beschriebenen Verfahrensschritte auszuführen und somit die elektrischen Maschine 190 zu betreiben und zu regeln.

Die Figur 6 zeigt ein schematisch dargestelltes Fahrzeug 600, welches ein elektrisches Antriebssystem 500 umfasst. Das Antriebssystem 500 umfasst die elektrische Maschine 190, welche einen Inverter 192 und einen elektrischen Motor 194 umfasst, und eine Vorrichtung 300 zur Regelung der elektrischen Maschine, wie zu Figur 5 beschrieben. Bevorzugt umfasst das elektrische Antriebssystem eine Batterie zur Versorgung des elektrischen Antriebssystems 500 mit elektrischer Energie.

## Patentansprüche

1. Verfahren (400) zur Regelung einer elektrischen Maschine (190) mit einem Grundwellenregler (200),
wobei der Grundwellenregler (200) mindestens einen ersten Filter (140) und mindestens einem zweiten Filter (142, 144) umfasst,
mit den Schritten:
Ermitteln (410) einer Rückführgröße (Idq) der elektrischen Maschine, wobei die Rückführgröße eine Istgröße einer Grundwelle und einer Oberwelle einer vorgegebenen Frequenz in einem feldorientierten System umfasst;
Filtern (412) einer vorgebbaren GW-Gleichführungsgröße (Idq*) mittels dem ersten Filter (140);
Ermitteln (414) einer gefilterten Rückführgröße ohne Grundwellenanteil (IdqWoFunda) als Differenz der Rückführgröße (Idq) und der gefilterten GW-Gleichführungsgröße (Idq*);
Filtern (416) der gefilterten Rückführgröße ohne Grundwellenanteil (IdqWoFunda) mittels mindestens einem zweiten Filter (142, 144);
Ermitteln (418) einer gefilterten Rückführgröße ohne Oberwellenanteil (IdqFunda) als Addition der Ausgangsgröße des mindestens einen zweiten Filters (142, 144) und der gefilterten GW-Gleichführungsgröße (Idq*);
Bestromen (480) mindestens einer Wicklung der elektrischen Maschine (190) in Abhängigkeit der gefilterten Rückführgröße ohne Oberwellenanteil (IdqFunda), **dadurch gekennzeichnet, dass** die gefilterte Rückführgröße ohne Oberwellenanteil für den Grundwellenregler bereitgestellt wird.

2. Verfahren nach Anspruch 1, wobei
die vorgebbaren GW-Gleichführungsgröße (Idq*) des feldorientierten Systems eine Sollgröße zur Erzeugung der Grundwelle eines sinusförmigen Phasenstroms zur Bestromung mindestens einer Wicklung der elektrischen Maschine (190) umfasst.

3. Verfahren nach einem der vorhergehenden Ansprüche, wobei
das Filtern (416) der gefilterten Rückführgröße ohne Grundwellenanteil (IdqWoFunda) mittels mindestens eines zweiten Filters (142, 144) ein Notch-Filtern der der gefilterten Rückführgröße ohne Grundwellenanteil (IdqWoFunda) umfasst.

4. Verfahren nach einem der vorhergehenden Ansprüche, wobei
das Filtern der vorgebbaren GW-Gleichführungsgröße (Idq*) mittels des ersten Filters (140) ein Tiefpassfiltern der GW-Gleichführungsgröße (Idq*) umfasst.

5. Verfahren nach Anspruch 1 oder 2, wobei
die Filterzeitkonstante des Filters (140) der Bandbreite des feldorientierten Systems entspricht.

6. Verfahren nach einem der vorhergehenden Ansprüche,
mit dem Grundwellenregler (200),
wobei der Grundwellenregler eine GW-Eingangstransformation (210), einen GW-Regler (220) und eine GW-Ausgangstransformation (230) umfasst,
mit den Schritten:
Ermitteln (402) einer Maschinen-Rückführgröße (labc), wobei die Maschinen-rückführgröße eine Istgröße der elektrischen Maschine umfasst;
Transformieren (404) der Maschinen-Rückführgröße (labc) mittels der GW-Eingangstransformation (210) zu einer Rückführgröße (Idq) in dem feldorientierten System;
Ermitteln (452) einer GW-Regelabweichung als Differenz einer vorgegebenen GW-Gleichführungsgröße (Idq*) und einer gefilterten Rückführgröße ohne Oberwellenanteil (IdqFunda) in dem feldorientierten System;
Ermitteln (454) einer GW-Gleichstellgröße mittels des GW-Reglers (220) in Abhängigkeit der GW-Regelabweichung;
Rücktransformieren (470) der GW-Gleichstellgröße mittels der GW-Ausgangstransformation (230) zu einer Maschinen-Stellgröße (Uabc*) und, Bestromen (480) mindestens einer Wicklung der elektrischen Maschine (190) in Abhängigkeit der Maschinen-Stellgröße (Uabc*).

7. Verfahren (400) nach Anspruch 6
mit einem Oberwellenregler (100)
wobei der Oberwellenregler eine Eingangstransformation (110), einen Regler (120) und eine Ausgangstransformation (130) umfasst,
mit den Schritten:
Transformieren (420) der gefilterten Rückführgröße ohne Grundwellenanteil (IdqWoFunda) mittels der Eingangstransformation zu einer Gleichrückführgröße (IHrmc) in einem oberwellenorientierten System;
Ermitteln (430) der Regelabweichung als Differenz einer vorgebbaren Gleichführungsgröße (IHrmc*) und der Gleichrückführgröße (IHrmc) in dem oberwellenorientierten System;
Ermitteln (440) einer Gleichstellgröße (UHrmc*) mittels des Reglers (120) in Abhängigkeit der Regelabweichung;
Rücktransformieren (450) der Gleichstellgröße (UHrmc*) mittels der Ausgangstransformation zu einer Stellgröße (UdqHrmc*) in dem feldorientierten System;
Überlagern (460) der GW-Gleichstellgröße mit der Stellgröße (UdqHrmc*) wobei bei dem Schritt Rücktransformieren (470) mittels der GW-Ausgangstransformation (230) zu einer Maschinen-Stellgröße (Uabc*) der Ausgangswert der Überlagerung (460) der GW-Gleichstellgröße mit der Stellgröße (UdqHrmc*) zu der Maschinen-Stellgröße (Uabc*) rücktransformiert wird.

8. Computerprogramm, umfassend Befehle, die bei der Ausführung des Programms durch eine Vorrichtung nach Anspruch 10 diese veranlassen, das Verfahren/die Schritte des Verfahrens nach Anspruch 1 bis 7 auszuführen.

9. Computerlesbares Speichermedium, umfassend Befehle, die bei der Ausführung durch eine Vorrichtung nach Anspruch 10 diese veranlassen, das Verfahren/die Schritte des Verfahrens nach Anspruch 1 bis 7 auszuführen.

10. Vorrichtung (300) zur Regelung einer elektrischen Maschine (190), mit einem Grundwellenregler (200),
mit einer Recheneinheit (310) und mindestens einem ersten Filter (140) und einem zweiten Filter (142, 144),
wobei die Vorrichtung dazu eingerichtet ist, die Schritte des Verfahrens nach Anspruch 1 bis 5 auszuführen.

11. Vorrichtung (300) nach Anspruch 10,
wobei der Grundwellenregler eine GW-Eingangstransformation (210), einen GW-Regler (220) und eine GW-Ausgangstransformation (230) umfasst,
wobei die Vorrichtung dazu eingerichtet ist, die Schritte des Verfahrens nach Anspruch 6 auszuführen.

12. Vorrichtung (300) nach Anspruch 11,
mit einem Oberwellenregler (100)
wobei der Oberwellenregler eine Eingangstransformation (110 ), einen Regler (120) und eine Ausgangstransformation (130) umfasst,
wobei die Vorrichtung dazu eingerichtet ist, die Schritte des Verfahrens nach Anspruch 7 auszuführen.

13. Elektrisches Antriebssystem (500) mit einer elektrischen Maschine (190) und einer Vorrichtung (300) nach einem der Ansprüche 10 bis 12.

14. Fahrzeug (600) mit einem elektrischen Antriebssystem (500) nach Anspruch 13.

## Claims

1. Method (400) for controlling an electric machine (190) with a fundamental controller (200),
wherein the fundamental controller (200) comprises at least one first filter (140) and at least one second filter (142, 144),
having the steps of:
ascertaining (410) a feedback variable (Idq) of the electric machine, wherein the feedback variable comprises an actual variable of a fundamental and of a harmonic of a specified frequency in a field-oriented system;
filtering (412) a specifiable fundamental DC reference variable (Idq*) by means of the first filter (140);
ascertaining (414) a filtered feedback variable without a fundamental component (IdqWoFunda) as the difference between the feedback variable (Idq) and the filtered fundamental DC reference variable (Idq*);
filtering (416) the filtered feedback variable without a fundamental component (IdqWoFunda) by means of at least one second filter (142, 144);
ascertaining (418) a filtered feedback variable without a harmonic component (IdqFunda) as the addition of the output variable of the at least one second filter (142, 144) and the filtered fundamental DC reference variable (Idq*);
energizing (480) at least one winding of the electric machine (190) as a function of the filtered feedback variable without a harmonic component (IdqFunda), **characterized in that** the filtered feedback variable without a harmonic component is provided for the fundamental controller.

2. Method according to Claim 1, wherein
the specifiable fundamental DC reference variable (Idq*) of the field-oriented system comprises a target variable for generating the fundamental of a sinusoidal phase current for energizing at least one winding of the electric machine (190).

3. Method according to either of the preceding claims, wherein
filtering (416) the filtered feedback variable without a fundamental component (IdqWoFunda) by means of at least one second filter (142, 144) comprises notch filtering the filtered feedback variable without a fundamental component (IdqWoFunda).

4. Method according to one of the preceding claims, wherein
filtering the specifiable fundamental DC reference variable (Idq*) by means of the first filter (140) comprises low-pass filtering the fundamental DC reference variable (Idq*).

5. Method according to Claim 1 or 2, wherein
the filter time constant of the filter (140) corresponds to the bandwidth of the field-oriented system.

6. Method according to one of the preceding claims,
with the fundamental controller (200),
wherein the fundamental controller comprises a fundamental input transformer (210), a fundamental controller (220) and a fundamental output transformer (230),
having the steps of:
ascertaining (402) a machine feedback variable (labc), wherein the machine feedback variable comprises an actual variable of the electric machine;
transforming (404) the machine feedback variable (labc) by means of the fundamental input transformer (210) to form a feedback variable (Idq) in the field-oriented system;
ascertaining (452) a fundamental control deviation as the difference between a specified fundamental DC reference variable (Idq*) and a filtered feedback variable without a harmonic component (IdqFunda) in the field-oriented system;
ascertaining (454) a fundamental DC manipulated variable by means of the fundamental controller (220) as a function of the fundamental control deviation;
back-transforming (470) the fundamental DC manipulated variable by means of the fundamental output transformer (230) to form a machine manipulated variable (Uabc*), and energizing (480) at least one winding of the electric machine (190) as a function of the machine manipulated variable (Uabc*).

7. Method (400) according to Claim 6
with a harmonic controller (100),
wherein the harmonic controller comprises an input transformer (110), a controller (120) and an output transformer (130),
having the steps of:
transforming (420) the filtered feedback variable without a fundamental component (IdqWoFunda) by means of the input transformer to form a DC feedback variable (IHrmc) in a harmonic-oriented system;
ascertaining (430) the control deviation as the difference between a specifiable DC reference variable (IHrmc*) and the DC feedback variable (IHrmc) in the harmonic-oriented system;
ascertaining (440) a DC manipulated variable (UHrmc*) by means of the controller (120) as a function of the control deviation;
back-transforming (450) the DC manipulated variable (UHrmc*) by means of the output transformer to form a manipulated variable (UdqHrmc*) in the field-oriented system;
superimposing (460) the fundamental DC manipulated variable with the manipulated variable (UdqHrmc*), wherein, in the step of back-transforming (470) by means of the fundamental output transformer (230) to form a machine manipulated variable (Uabc*), the output value of the superimposition (460) of the fundamental DC manipulated variable with the manipulated variable (UdqHrmc*) is back-transformed to form the machine manipulated variable (Uabc*).

8. Computer program, comprising instructions, which, when the program is executed by a device according to Claim 10, cause the latter to carry out the method/the steps of the method according to Claims 1 to 7.

9. Computer-readable storage medium, comprising instructions, which, when executed by a device according to Claim 10, cause the latter to carry out the method/the steps of the method according to Claims 1 to 7.

10. Device (300) for controlling an electric machine (190) with a fundamental controller (200),
with a computing unit (310) and at least one first filter (140) and one second filter (142, 144),
wherein the device is configured to carry out the steps of the method according to Claims 1 to 5.

11. Device (300) according to Claim 10,
wherein the fundamental controller comprises a fundamental input transformer (210), a fundamental controller (220) and a fundamental output transformer (230),
wherein the device is configured to carry out the steps of the method according to Claim 6.

12. Device (300) according to Claim 11,
with a harmonic controller (100),
wherein the harmonic controller comprises an input transformer (110), a controller (120) and an output transformer (130),
wherein the device is configured to carry out the steps of the method according to Claim 7.

13. Electric drive system (500) with an electric machine (190) and a device (300) according to one of Claims 10 to 12.

14. Vehicle (600) with an electric drive system (500) according to Claim 13.

## Revendications

1. Procédé (400) de régulation d'une machine électrique (190) comprenant un régulateur d'onde fondamentale (200),
dans lequel le régulateur d'onde fondamentale (200) comprend au moins un premier filtre (140) et au moins un deuxième filtre (142, 144),
comprenant les étapes consistant à :
déterminer (410) une variable de rétroaction (Idq) de la machine électrique, ladite variable de rétroaction comprenant une variable réelle d'une onde fondamentale et d'une onde harmonique d'une fréquence prédéfinie dans un système orienté champ ;
filtrer (412) une variable de référence continue GW prédéfinissable (Idq*) au moyen du premier filtre (140) ;
déterminer (414) une variable de rétroaction filtrée sans composante d'onde fondamentale (IdqWoFunda) comme différence entre la variable de rétroaction (Idq) et la variable de référence continue GW filtrée (Idq*) ;
filtrer (416) la variable de rétroaction filtrée sans composante d'onde fondamentale (IdqWoFunda) au moyen d'au moins un deuxième filtre (142, 144) ;
déterminer (418) une variable de rétroaction filtrée sans composante harmonique (IdqFunda) comme addition de la variable de sortie dudit au moins deuxième filtre (142, 144) et de la variable de référence continue GW filtrée (Idq*) ;
alimenter (480) au moins un enroulement de la machine électrique (190) en fonction de la variable de rétroaction filtrée sans composante harmonique (IdqFunda), **caractérisé en ce que** la variable de rétroaction filtrée sans composante harmonique est fournie au régulateur d'onde fondamentale.

2. Procédé selon la revendication 1, dans lequel
la variable de référence continue GW prédéfinissable (Idq*) du système orienté champ comprend une variable de consigne pour générer l'onde fondamentale d'un courant de phase sinusoïdal pour alimenter au moins un enroulement de la machine électrique (190).

3. Procédé selon l'une des revendications précédentes, dans lequel
le filtrage (416) de la variable de rétroaction filtrée sans composante d'onde fondamentale (IdqWoFunda) au moyen d'au moins un deuxième filtre (142, 144) comprend un filtrage coupe-bande de la variable de rétroaction filtrée sans composante d'onde fondamentale (IdqWoFunda).

4. Procédé selon l'une des revendications précédentes, dans lequel
le filtrage de la variable de référence continue GW prédéfinissable (Idq*) au moyen du premier filtre (140) comprend un filtrage passe-bas de la variable de référence continue GW (Idq*).

5. Procédé selon la revendication 1 ou 2, dans lequel
la constante de temps du filtre (140) correspond à la largeur de bande du système orienté champ.

6. Procédé selon l'une des revendications précédentes,
comprenant le régulateur d'onde fondamentale (200),
dans lequel le régulateur d'onde fondamentale comprend une transformation d'entrée GW (210), un régulateur GW (220) et une transformation de sortie GW (230),
comprenant les étapes consistant à :
déterminer (402) une variable de rétroaction machine (labc), la variable de rétroaction machine comprenant une variable réelle de la machine électrique ;
transformer (404) la variable de rétroaction machine (labc) au moyen de la transformation d'entrée GW (210) en une variable de rétroaction (Idq) dans le système orienté champ ;
déterminer (452) un écart de régulation GW comme différence entre une variable de référence continue GW prédéfinie (Idq*) et une variable de rétroaction filtrée sans composante harmonique (IdqFunda) dans le système orienté champ ;
déterminer (454) une variable de commande continue GW au moyen du régulateur GW (220) en fonction de l'écart de régulation GW ;
effectuer une transformation inverse (470) de la variable de commande continue GW au moyen de la transformation de sortie GW (230) en une variable de réglage machine (Uabc*) et alimenter (480) au moins un enroulement de la machine électrique (190) en fonction de la variable de réglage machine (Uabc*).

7. Procédé (400) selon la revendication 6,
comprenant un régulateur d'harmoniques (100)
dans lequel le régulateur d'harmoniques comprend une transformation d'entrée (110), un régulateur (120) et une transformation de sortie (130),
comprenant les étapes consistant à :
transformer (420) la variable de rétroaction filtrée sans composante d'onde fondamentale (IdqWoFunda) au moyen de la transformation d'entrée en une variable de rétroaction continue (IHrmc) dans un système orienté harmonique ;
déterminer (430) l'écart de régulation comme différence entre une variable de référence continue prédéfinissable (IHrmc*) et la variable de rétroaction continue (IHrmc) dans le système orienté harmonique ;
déterminer (440) une variable de commande continue (UHrmc*) au moyen du régulateur (120) en fonction de l'écart de régulation ;
effectuer une transformation inverse (450) de la variable de commande continue (UHrmc*) au moyen de la transformation de sortie en une variable de réglage (UdqHrmc*) dans le système orienté champ ;
superposer (460) la variable de commande continue GW avec la variable de réglage (UdqHrmc*), dans lequel, lors de l'étape de transformation inverse (470) au moyen de la transformation de sortie GW (230) en une variable de réglage machine (Uabc*), la valeur de sortie de la superposition (460) de la variable de commande continue GW avec la variable de réglage (UdqHrmc*) est soumise à une transformation inverse en la variable de réglage machine (Uabc*).

8. Produit de programme informatique, comprenant des instructions qui, lors de l'exécution du programme par un dispositif selon la revendication 10, amènent ce dernier à mettre en œuvre le procédé/les étapes du procédé selon les revendications 1 à 7.

9. Support de stockage lisible par ordinateur comprenant des instructions qui, lorsqu'elles sont exécutées par un dispositif selon la revendication 10, amènent ce dernier à mettre en œuvre le procédé/les étapes du procédé selon les revendications 1 à 7.

10. Dispositif (300) de régulation d'une machine électrique (190), comprenant un régulateur d'onde fondamentale (200),
comportant une unité de calcul (310) et au moins un premier filtre (140) et un deuxième filtre (142, 144),
le dispositif étant conçu pour mettre en œuvre les étapes du procédé selon les revendications 1 à 5.

11. Dispositif (300) selon la revendication 10,
dans lequel le régulateur d'onde fondamentale comprend une transformation d'entrée GW (210), un régulateur GW (220) et une transformation de sortie GW (230),
le dispositif étant conçu pour mettre en œuvre les étapes du procédé selon la revendication 6.

12. Dispositif (300) selon la revendication 11,
comprenant un régulateur d'harmoniques (100)
dans lequel le régulateur d'harmoniques comprend une transformation d'entrée (110), un régulateur (120) et une transformation de sortie (130),
le dispositif étant conçu pour mettre en œuvre les étapes du procédé selon la revendication 7.

13. Système d'entraînement électrique (500) comprenant une machine électrique (190) et un dispositif (300) selon l'une des revendications 10 à 12.

14. Véhicule automobile (600) comprenant un système d'entraînement électrique (500) selon la revendication 13.
